# EUROPEAN PATENT APPLICATION

(11) **EP 2 752 521 A1**
(43) Date of publication of application: **09.07.2014**
(21) Application number: 14150112.2
(22) Date of filing: 03.01.2014
(51) Int. Cl.: D21B 1/02, D21B 1/32, D21H 27/00

(54) **A method for manufacturing a fiber based product, a fiber based product and a starting material and its use**

(30) Priority: 04.01.2013 FI 20135009
(71) Applicant: UPM-Kymmene Corporation, 00100 Helsinki (FI)
(72) Inventor: Pykäläinen, Nina, 53300 Lappeenranta (FI); Nupponen, Tarja, 53300 Lappeenranta (FI); Kutvonen, Samppa, 41564 Kaarst (DE); Clemens, Guido, 50354 Hürth (DE)
(74) Representative: Papula Oy

(57) **Abstract**

The invention relates to a method for manufacturing a fiber based product, wherein at least part of the fiber based product is formed from a composition which includes a starting material containing at least one reject based component, and the reject based component is formed from waste paper treatment reject, coarse screening reject, pre-screening reject, flotation reject, fine screening reject, reject from paper manufacturing, dissolved air flotation reject and/or their combinations. Further, the invention relates to a fiber based product and a starting material.

## Description

### FIELD OF THE INVENTION

The invention relates to a method for manufacturing a fiber based product. Further, the invention relates to a fiber based product. Further, the invention relates to a starting material and its use.

### BACKGROUND OF THE INVENTION

Known from prior art are different rejects in the paper manufacturing and waste paper treatment. Typically the rejects are waste, and they are incinerated or are disposed.

### OBJECTIVE OF THE INVENTION

The objectives of the invention are to disclose a new method for utilizing rejects from a waste paper treatment and/or a paper manufacturing and for manufacturing new type products.

### SUMMARY OF THE INVENTION

The method for manufacturing a fiber based product according to the present invention is characterized by what is presented in claim 1.

The starting material according to the present invention is characterized by what is presented in claim 9.

The use of the starting material according to the present invention is characterized by what is presented in claim 12.

The fiber based product according to the present invention is characterized by what is presented in claim 15.

### BRIEF DESCRIPTION OF THE FIGURES

The accompanying figures, which are included to provide a further understanding of the invention and constitutes a part of this specification, illustrate some embodiments of the invention and together with the description help to explain the principles of the invention. In the figures:
Fig. 1 is a flow chart illustration of a method according to one embodiment of the present invention,
Fig. 2 is a flow chart illustration of a method according to one embodiment of the present invention,
Fig. 3 is a flow chart illustration of a method according to one embodiment of the present invention,
Fig. 4 is a flow chart illustration of a method according to one embodiment of the present invention, and
Fig 5 is a flow chart illustration of a waste paper treatment.

### DETAILED DESCRIPTION OF THE INVENTION

In the present invention, at least part of the fiber based product 6 is formed from a composition which includes a starting material 2 containing at least one reject based component 1, and the reject based component includes waste paper treatment reject, coarse screening reject, pre-screening reject, flotation reject, fine screening reject and/or reject from paper manufacturing and/or dissolved air flotation reject and/or their combinations.

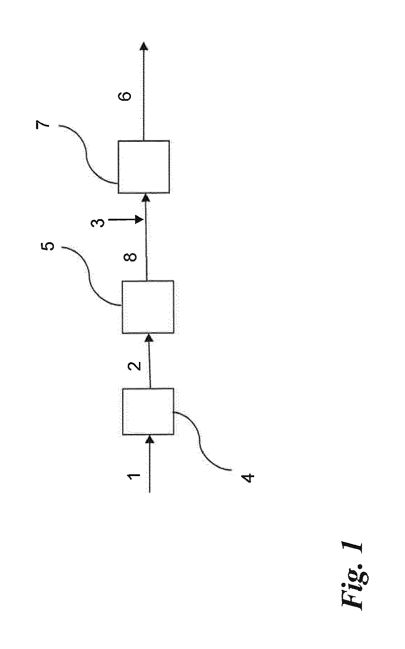

A process of the present invention is presented in figures 1 to 4.

In this context, the starting material 2 means any reject based material which includes one or more reject based component 1. The starting material may be in the form of sludge, slurry, suspension, bulk, stuff, dried composition, solid composition, pellets, granulates, sheet, bale or their combination. In this invention the starting material includes 95 - 100 w-%, preferably about 100 w-%, reject based components. Preferably, the starting material mainly consists of reject based component or components.

In this context, the reject based component 1 contains reject from waste paper treatment and/or paper manufacturing. The reject may include one reject fraction or more than one reject fractions. In this context, the reject means any reject, residue, residue flow and/or side flow from a waste paper treatment and/or paper manufacturing, such as a paper mill. In one embodiment the reject may be dewatered and/or dried. The reject based component may be in the form of sludge, slurry, suspension or the like.

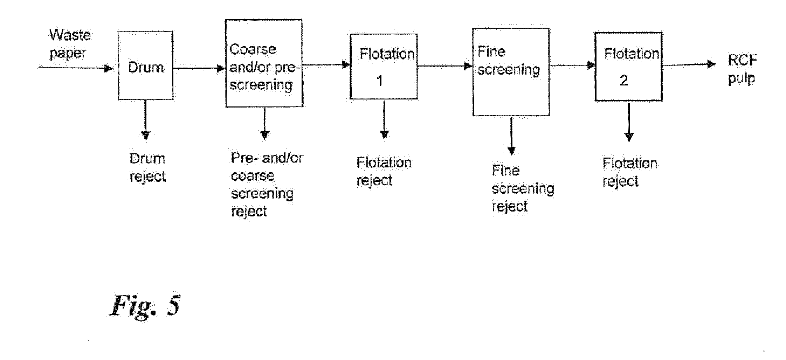

In one embodiment the reject based component contains reject or rejects, such as rejects and residues, from a waste paper treatment, e.g from a deinking process. A typical waste paper treatment process is presented in figure 5. In one embodiment the reject comprises RCF reject (recycled fiber reject). In this context, RCF reject means any RCF reject or deinking reject, or any sludge or any combination of different RCF rejects from RCF process, i.e. from re-circulated fiber plant, in which waste paper is treated. The reject may include minerals used in paper coating, filler and printing inks, and fibers, fines, sticky materials like starch, latex and other adhesive or adhesives, and other inorganic components and/or small amount of other components, preferably other reject components. In one embodiment the reject is high solid sludge in which dry solid content can be about 50 - 70 %. In one embodiment the reject is low solid sludge. In one embodiment the reject can be dewatered to form the high solid sludge before a use as the reject based component in the method of the present invention. In one embodiment, the reject may be treated in the dewatering by means of a gravitation table, disc filter, screw press and/or pressure apparatus or the like before the method of the present invention.

Typically the reject, such as RCF reject, from a waste paper treatment comprises coarse screening reject, pre-screening reject, first flotation reject, fine screening reject, dissolved air flotation reject and/or second flotation reject. The pre-screening reject and/or coarse screening reject come from the pre- and/or coarse screens of the deinking plant. The pre- and coarse screening reject may include fibers, fines, sticky materials, minerals, other inorganic components and their combinations. The flotation and fine screening rejects may include minerals, fibers, fines, sticky materials, other inorganic components and their combinations.

Further, the reject based component may include reject or rejects, such as sludges, rejects and residues, from the paper manufacturing. In this context, the paper manufacturing means any process stage or step in the paper manufacturing, such as in a paper mill, for producing any paper or any paper type product, such as cardboard, board, paper-type fiber based product or the like, or such as in a wood handling plant, for treating wood raw material before the paper production. The reject may include any rejects from any paper industry process. In one embodiment the reject from the paper manufacturing comprises rejects from mechanical pulp department, rejects from paper machine, rejects from paper coating, rejects from paper brokes, centrifugal cleaner rejects, dissolved air flotation reject or their combinations.

The dissolved air flotation reject includes residue or residues from the dissolved air flotation process in connection with the waste paper treatment and/or paper manufacturing. The residue from the dissolved air flotation process may be in the form of slurry, suspension or the like. The dissolved air flotation (DAF) process is a water treatment process that clarifies wastewaters or other waters by the removal of suspended matter such as solids or in some embodiment oils or other matter. The removal is achieved by dissolving air in the water or wastewater under pressure and then releasing the air at atmospheric pressure in a flotation tank or basin. The released air forms tiny bubbles which adhere to suspended matter causing the suspended matter to float to the surface of the water where it may then be removed by a skimming device. In the waste paper treatment the dissolved air flotation process is used for cleaning or purifying the process waters coming e.g. from RCF pulp thickening. In the paper manufacturing the dissolved air flotation process is used for cleaning or purifying the process waters. A water-carrying reject, e.g. process water or wastewater, from the waste paper treatment or paper manufacturing is supplied into the dissolved air flotation process, and the slurry or suspension residue from said process is called as a dissolved air flotation reject. In one embodiment the dissolved air flotation process may be used in connection with the thickening after the flotation and/or the fine screening in the waste paper treatment.

The starting material is formed from one or more reject based component. The starting material can be used as a raw material in a paper manufacturing. A technical effect is that reject based material from waste paper treatment and from paper manufacturing can be utilized as a new product or in a new product.

In this context, the composition in the forming of the fiber based product means any composition which includes the starting material 2. Further, the composition may include water, pulp, such as RCF pulp, chemical pulp, TMP pulp, CTMP pulp, PGW pulp and/or other pulp, nanofibrillar cellulose, or fibers, such as virgin fibers, long fiber fraction, other fiber fractions, RCF fibers, chemical fibers, TMP fibers, CTMP fibers, PGW fibers, other fibers and/or fiber composition, or the like or their combinations.

In one embodiment the composition contains 80 - 100 w-% starting material. In one embodiment the composition contains below 80 w-% starting material. In one embodiment the composition contains over 50 w-% starting material. In one embodiment the composition contains below 50 w-% starting material. In one embodiment the composition contains below 20 w-% and in one embodiment below 10 w-% starting material.

In this context, the fiber based product means any product which is formed from fibers or fiber based raw material. The fiber based product may be a paper based product. In this context, the paper means any paper, cardboard, board, paper-type fiber based product or the like. In one embodiment the fiber based product 6 is selected from the group containing paper, paper board, brown paper board, graphic board, fiber board, liner board, kraft board, filler board, cardboard, paper component in gypsum board, paper component in insulating sheet, tissue papers, such as toilet paper or kitchen paper, packaging paper, asphalt composition, moulded pulp product, insulation product, construction material and other suitable embodiments and their combinations.

A technical effect of the invention is that different rejects from a waste paper treatment and/or a paper manufacturing can be utilized. The materials of the fractions can be reused and then environmental load decreases.

In one embodiment the reject based component is recovered.

In one embodiment the reject based component or components 1 are mixed in a first mixing step 4 to form the starting material 2.

In one embodiment the starting material 2 is dewatered and/or dried.

In one embodiment the starting material 2 is dewatered at one or more stages 5, 5a. In one embodiment water, preferably free water, is removed from the starting material mechanically in the dewatering 5a. In one embodiment the dewatering 5a is carried out in one or more steps.

In one embodiment the starting material 8 is dried 5b in one or more steps, preferably after the dewatering 5a in order to remove bound water which cannot be removed mechanically.

In one embodiment the reject based component 1 is dewatered at one or more stages before the forming of the starting material. In one embodiment water, preferably free water, is removed from the reject based component mechanically in the dewatering. In one embodiment the starting material is formed from the dewatered reject based component or components. In one embodiment the formed starting material may be dried.

The dewatering 5, 5a and/or drying 5, 5b of the reject based component or the starting material can be carried out in one or more steps. In one embodiment the dewatering 5a is made in one step. In one embodiment the dewatering 5a is made in at least two steps. In one embodiment the drying 5b is made in one or more drying steps. In one embodiment the dry content of the starting material 8, 9 is over 30 %, preferably over 50 %, preferably between 50 to 99 %, after the dewatering and/or the drying. In one embodiment the dry content of the starting material 8, 9 is over 60 %, and in one embodiment over 70 %, after the dewatering and/or the drying. In one embodiment, after the dewatering dry content of the dewatered starting material is between 20 to 70 %, in one embodiment between 50 to 70 %, in one embodiment between 30 to 70 %, and in one embodiment between 30 to 50 %. In one embodiment, after the dewatering and drying dry content of the dried starting material is between 40 to 99 %, in one embodiment between 50 to 99 %, in one embodiment between 60 to 99 %, and in one embodiment between 70 to 99 %. In one embodiment the dry content of the reject based component 1 is over 30 %, preferably between 30 to 70 %, after the dewatering. In one embodiment the dry content of the reject based component 1 is over 50 %, preferably between 60 to 80 %, after the dewatering and/or drying. In one embodiment the dry content of the reject based component is between 50 to 70 % after the two-stage dewatering. In one embodiment the dry content of the reject based component is between 70 to 99 % after the dewatering and the drying. In one embodiment the dewatering and/or drying can be made by means of device selected from the group: gravitation table, disc filter, screw press, wire press, double wire press, fabric press, double fabric press, indirect dryer, direct sludge dryer, paddle dryer, flash dryer, fluidized bed dryer, cyclone dryer, air dryer, air grinder, rotor mill, centrifugal mill, air turbulence mill, air turbulence dryer and other suitable dryers and other suitable mills, and their combinations. Also other drying devices are possible. In one embodiment a drying device can also act as a grinder. In one embodiment a grinder can act as a drying device.

In one embodiment the starting material 2, 8, 9 of the invention is post-treated by a suitable method in order to arrange into the form of dried composition, solid composition, pressed product, briquets, pellets, granulates, sheet, bale or their combination. In one embodiment, the starting material is pelletized for forming briquettes, pellets or granulates. In one embodiment the pelletizing is carried out after the dewatering 5, 5a and/or drying 5, 5b. In one embodiment the pelletizing is carried out after the dewatering 5, 5a and drying 5, 5b.

The starting material 2, 8, 9 of the invention including reject based component is used as such or as a raw material component in different final products. In one embodiment the starting material is used as such or as a raw material component in different final products after the dewatering 5a. In one embodiment the starting material is used as such or as a raw material component in different final products after the dewatering 5a and drying 5b. In one embodiment the starting material is used as such or as a raw material component in a fiber based product 6. In one embodiment the starting material is used as such or as a raw material component in a paper based product after the dewatering 5a or after the dewatering 5a and drying 5b. In one embodiment the starting material is used as such or as a raw material component in asphalt composition, moulded pulp product, insulation product or construction material after the dewatering 5a or after the dewatering 5a and drying 5b. In one embodiment the starting material according to the present invention can be used as fuel for producing energy.

In one embodiment the starting material 2, 8, 9 is mixed with other material 3 selected from the group containing water, pulp, such as RCF pulp, chemical pulp, TMP pulp, CTMP pulp, PGW pulp and/or other pulp, nanofibrillar cellulose, or fibers, such as virgin fibers, long fiber fraction, other fiber fractions, RCF fibers, chemical fibers, TMP fibers, CTMP fibers, PGW fibers, other fibers and/or fiber composition used in e.g. paper or cardboard manufacturing, or the like or their combinations to form the composition for fiber based product manufacturing 7. The composition may include 1 - 100 w-% starting material and 0 - 99 w-% other material.

In one embodiment the fiber based product is formed from the composition including the starting material. In one embodiment at least one layer of the fiber based product is formed from the composition including the starting material. In one embodiment a middle layer of the fiber based product is formed from the composition including the starting material. In one embodiment a surface layer of the fiber based product is formed from the composition including the starting material. In one embodiment a back layer of the fiber based product is formed from the composition including the starting material. In one embodiment any layer of the fiber based product is formed from the composition including the starting material. In one embodiment more than one layer of the fiber based product is formed from the composition including the starting material. Then each layer can be formed from different compositions, or alternatively said layers can be formed from the same composition. In one embodiment the fiber based product is formed totally from the composition including the starting material.

In one embodiment the starting material is used in brown paper board, graphic board, container board, fiber board, coreboard, chipboard and greyboard manufacturing. The starting material may include one or more reject based component as different component combinations. In one embodiment the starting material includes the reject based components selected from the group containing waste paper treatment reject, coarse screening reject, pre-screening reject, first flotation reject, second flotation reject, fine screening reject, reject from paper manufacturing and dissolved air flotation reject and their combinations.

In one embodiment the starting material including flotation and fine screening rejects is used in brown paper board manufacturing. In a preferred embodiment, this starting material is mixed with the other material, such as pulp, fibers or nanofibrillar cellulose, to form the composition for fiber based product manufacturing.

In one embodiment the starting material including pre- and/or coarse screening rejects is used in brown paper board manufacturing. In one embodiment this starting material is used to form the composition for fiber based product manufacturing. In one embodiment, this starting material is mixed with the other material, such as pulp, fibers or nanofibrillar cellulose, to form the composition for fiber based product manufacturing. In one embodiment this starting material is used as such in the middle layer of brown paper board.

In one embodiment the starting material including pre- and/or coarse screening and fine screening rejects is used in brown paper board manufacturing. In one embodiment this starting material is used to form the composition for fiber based product manufacturing. In one embodiment, this starting material is mixed with the other material, such as pulp, fibers or nanofibrillar cellulose, to form the composition for fiber based product manufacturing. In one embodiment this starting material is used as such in the middle layer, in the top layer or in the other layer of brown paper board.

In one embodiment the starting material including pre- and/or coarse screening and flotation and fine screening rejects is used in brown paper board manufacturing. In one embodiment this starting material is used to form the composition for fiber based product manufacturing. In one embodiment, this starting material is mixed with the other material, such as pulp, fibers or nanofibrillar cellulose, to form the composition for fiber based product manufacturing.

In one embodiment the starting material including a coarse screening reject is used in graphic board. In one embodiment, this starting material is used as such in the middle layer of board.

In one embodiment the starting material including at least one reject or rejects from paper manufacturing is used in brown paper board manufacturing. In one embodiment the starting material including at least one reject or rejects from paper manufacturing and at least one reject or rejects from waste paper treatment is used in brown paper board manufacturing. In one embodiment these above starting materials are used to form the composition for fiber based product manufacturing. In one embodiment, these above starting materials are mixed with the other material, such as pulp, fibers or nanofibrillar cellulose, to form the composition for fiber based product manufacturing.

In one embodiment the starting material includes also one or more dissolved air flotation rejects from the waste paper treatment and/or paper manufacturing. In one embodiment the starting material includes also one or more dissolved air flotation rejects in addition to other reject or rejects from waste paper treatment and/or paper manufacturing.

In the present invention, different reject fractions can be recovered and they can be utilized in the products. In this invention, the rejects are not recirculated as reject flows back to process. The present invention provides products with good or adequate quality. The method of the present invention offers a possibility to prepare the products from the rejects cost-effectively and energy-effectively. By means of the starting material including rejects can be replaced at least a part of the pulp, fibers or nanofibrillar cellulose. The method according to the present invention is easy and simple to realize as a production process.

The method according to the present invention is suitable for use in the manufacture of the different products from different rejects.

### EXAMPLES

The invention is described in more detail by the following examples with reference to accompanying figures.

### Example 1

In this example, which is shown in figure 1, a paper based product is formed from a starting material 2. The starting material 2 contains about 100 w-% reject based component 1 comprising pre- and/or coarse screening reject from a deinking process (fig. 5). The reject based component is in the form of a low solid sludge, in which dry solid content is about 0.5 - 5 %. The pre- and/or coarse screening reject is fed from the deinking process, and the starting material 2 is formed from the pre- and/or coarse screening reject. The reject based component is mixed at a first mixing stage 4, if needed, in order to form the starting material 2. The starting material 2 is dewatered in one or two steps at a dewatering stage 5, e.g. by a disc filter and screw press, so that the dry content of the starting material 8 is about 30 to 70 %. Alternatively, the dewatered starting material 8 can be further dried at a drying stage, e.g. by air dryer or rotor mill, after the dewatering 5 so that the dry content of the starting material is between 50 to 99 % after the drying. A paper based product 6 is formed from the dewatered 8 and/or dried starting material in the brown paper board manufacturing stage 7. The dewatered 8 and/or dried starting material may be used as such in a middle layer or other layer of the brown paper board. Alternatively, pulp, fibers and/or nanofibrillar cellulose 3 may be added, if needed, into the starting material in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 2

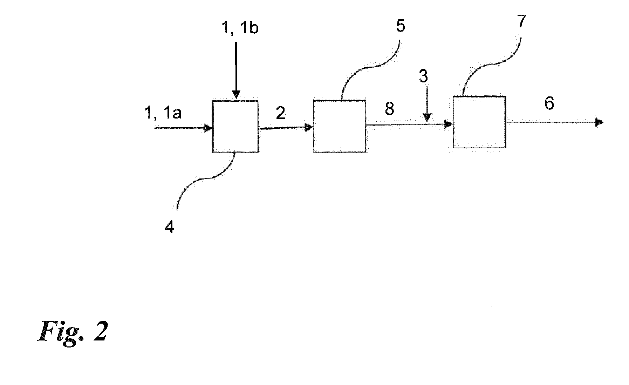

In this example, which is shown in figure 2, a paper based product is formed from a starting material 2. The starting material 2 contains about 100 w-% reject based components 1, component 1a, alternatively components 1a and 1c (1c is not shown in figure), comprising pre- and/or coarse screening rejects and component 1b comprising fine screening reject, from a waste paper treatment process (fig. 5). The reject based components are in the form of a low solid sludge, in which dry solid content is about 0.5 - 5 %. The rejects are fed from the waste paper treatment process, and the starting material 2 is formed from the rejects. The reject based components are mixed at a first mixing stage 4, if needed, in order to form the starting material 2. The starting material 2 is dewatered in one or two steps at a dewatering stage 5 so that the dry content of the starting material 8 is about 30 to 50 %. Alternatively, the dewatered starting material 8 can be further dried after the dewatering so that the dry content of the starting material is between 50 to 99 % after the drying. A paper based product 6 is formed from the dewatered 8 and/or dried starting material in the brown paper board manufacturing stage 7. The dewatered 8 and/or dried starting material may be utilized as such in middle layer or other layer of a brown paper board. Alternatively, pulp, fibers and/or nanofibrillar cellulose 3 may be added into the starting material in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 3

In this example, a paper based product is formed from a starting material 2 according to figure 2. The starting material 2 contains about 100 w-% reject based components 1, in which components 1a and 1b, alternatively components 1a - 1d or 1a - 1e (1c,d,e are not shown in figure), comprising coarse screening and/or pre-screening rejects, flotation 1 and 2 rejects and fine screening reject, from a waste paper treatment process (fig. 5). The reject based components are in the form of a low solid sludge, in which dry solid content is about 0.5 - 5 %. The rejects are fed from the waste paper treatment process, and the starting material 2 is formed from the rejects. The reject based components are mixed at a first mixing stage 4 in order to form the starting material 2. The starting material 2 is dewatered in one or two step at a dewatering stage 5 so that the dry content of the starting material 8 is about 50 to 70 %. Alternatively, the dewatered starting material 8 can be further dried after the dewatering so that the dry content of the starting material is between 70 to 99 % after the drying. A paper based product 6 is formed from the dewatered 8 and/or dried starting material in the brown paper board manufacturing stage 7. Pulp, fibers and/or nanofibrillar cellulose 3 are added into the starting material in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 4

In this example, which is shown in figure 1, a paper based product is formed from a starting material 2. The starting material 2 contains about 100 w-% reject based component 1 comprising pre- and/or coarse screening reject from a deinking process (fig. 5). The reject based component is in the form of a low solid sludge, in which dry solid content is about 0.5 - 5 %. The pre- and/or coarse screening reject is fed from the deinking process, and the starting material 2 is formed from the pre- and/or coarse screening reject. The reject based component is mixed at a first mixing stage 4, if needed, in order to form the starting material 2. The starting material 2 is dewatered in two steps at a dewatering stage 5, by a disc filter and screw press, so that the dry content of the starting material 8 is about 30 to 40 %. Alternatively, the dewatered starting material 8 can be further dried at a drying stage, e.g. by air dryer or rotor mill, after the dewatering 5 so that the dry content of the starting material is between 40 to 99 % after the drying. A paper based product 6 is formed from the dewatered 8 and/or dried starting material in the brown paper board manufacturing stage 7. The dewatered 8 and/or dried starting material may be used as such in a middle layer or other layer of the brown paper board. Alternatively, pulp, fibers and/or nanofibrillar cellulose 3 may be added, if needed, into the starting material in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 5

In this example, a paper based product is formed from a starting material 2 according to figure 2. The starting material 2 contains about 100 w-% reject based components 1, component 1a comprising coarse screening reject and 1b, alternatively 1b - 1c (1c is not shown in figure), comprising rejects from two flotation steps, from a waste paper treatment process (fig. 5). The reject based components are in the form of a low solid sludge, in which dry solid content is about 0.5 - 5 %. The rejects are fed from the waste paper treatment process, and the starting material 2 is formed from the rejects. The reject based components are mixed at a first mixing stage 4, if needed, in order to form the starting material 2. The starting material 2 is dewatered in one or two step at a dewatering stage 5 so that the dry content of the starting material 8 is about 40 to 70 %. Alternatively, the dewatered starting material 8 can be further dried after the dewatering so that the dry content of the starting material is between 50 to 99 % after the drying. A paper based product 6 is formed from the dewatered 8 and/or dried starting material in the brown paper board manufacturing stage 7. Pulp, fibers and/or nanofibrillar cellulose 3 are added into the starting material in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 6

In this example, a paper based product is formed from a starting material 2 according to figure 2. The starting material 2 contains about 100 w-% reject based components 1, component 1a comprising fine screening reject and 1b, alternatively 1b - 1c (1c is not shown in figure), comprising rejects from two flotation steps, from a waste paper treatment process (fig. 5). The reject based components are in the form of a low solid sludge, in which dry solid content is about 0.5 - 5 %. The rejects are fed from the waste paper treatment process, and the starting material 2 is formed from the rejects. The reject based components are mixed at a first mixing stage 4, if needed, in order to form the starting material 2. The starting material 2 is dewatered in one or two step at a dewatering stage 5 so that the dry content of the starting material 8 is about 30 to 50 %. Alternatively, the dewatered starting material 8 can be further dried after the dewatering so that the dry content of the starting material is between 50 to 99 % after the drying. A paper based product 6 is formed from the dewatered 8 and/or dried starting material in the brown paper board manufacturing stage 7. Pulp, fibers and/or nanofibrillar cellulose 3 are added into the starting material in connection with the manufacturing stage 7, and the formed composition is utilized in the manufacturing of the brown paper board or its part, e.g. in a middle layer or in another layer. In one embodiment the composition contains 5 to 15 w-% starting material and 85 to 95 pulp, e.g. RCF pulp. In one embodiment the composition contains 5 to 40 w-% starting material and 60 to 95 pulp, e.g. PGW pulp. In one embodiment the composition contains 40 to 60 w-% starting material and 40 to 60 pulp, e.g. chemical pulp. Alternatively, this starting material may be used also in the manufacturing of other paper based products, asphalt composition, moulded pulp product, insulation product, construction material or other fiber based products.

### Example 7

In this example, a paper based product is formed from a starting material 2 according to figure 1. The starting material 2 contains about 100 w-% reject based component 1 comprising rejects from a paper manufacturing process. The reject based component is fed from the paper manufacturing process, and the starting material 2 is formed from the reject based component. The reject based component is mixed at a first mixing stage 4, if needed, in order to form the starting material 2. The starting material 2 is dewatered in one or two step at a dewatering stage 5 so that the dry content of the starting material 8 is about 20 to 70 %. Alternatively, the dewatered starting material 8 can be further dried after the dewatering so that the dry content of the starting material is between 70 to 99 % after the drying. A paper based product 6 is formed from the dewatered 8 and/or dried starting material in the brown paper board manufacturing stage 7. The dewatered 8 and/or dried starting material may be used as such in a middle layer or other layer of the brown paper board. Alternatively, pulp, fibers and/or nanofibrillar cellulose 3 may be added, if needed, into the starting material in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 8

In this example, a paper based product is formed from a starting material 2 according to figure 2. The starting material 2 contains about 100 w-% reject based components 1, component 1a comprising reject or rejects from a paper manufacturing process and component 1b comprising reject or rejects from a waste paper treatment process (fig. 5). The reject based components are fed from the paper manufacturing process and the waste paper treatment process, and the starting material 2 is formed from the reject based components. The reject based components are mixed at a first mixing stage 4, if needed, in order to form the starting material 2. The starting material 2 is dewatered in one or two step at a dewatering stage 5 so that the dry content of the starting material 8 is about 20 - 70 %. Alternatively, the dewatered starting material 8 can be further dried after the dewatering so that the dry content of the starting material is between 50 to 99 % after the drying. A paper based product 6 is formed from the dewatered 8 and/or dried starting material in the brown paper board manufacturing stage 7. The dewatered 8 and/or dried starting material may be used as such in a middle layer or other layer of the brown paper board. Alternatively, pulp, fibers and/or nanofibrillar cellulose 3 may be added, if needed, into the starting material in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 9

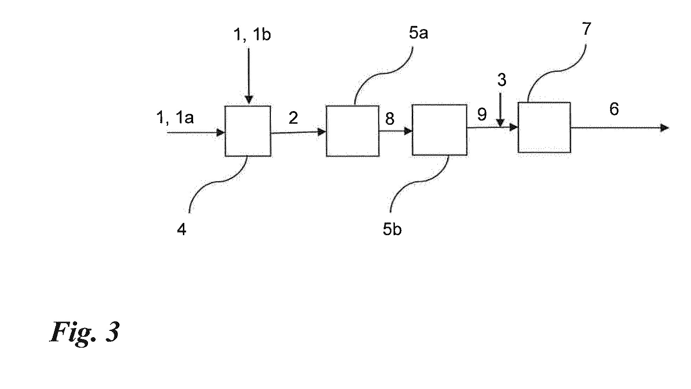

In this example, a paper based product is formed from a starting material 2 according to figure 3. The starting material 2 contains about 100 w-% reject based components 1, component 1a comprising rejects from a waste paper treatment process (fig. 5) and 1b comprising rejects from a paper manufacturing process. The starting material 2 is formed from the rejects. The reject based components are mixed at a first mixing stage 4, if needed, in order to form the starting material 2. The starting material 2 is dewatered in one or two step at a dewatering stage 5a so that the dry content of the starting material 8 is between 30 to 70 %. After that the dewatered starting material 8 is dried at a drying stage 5b so that the dry content of the starting material 9 is between 70 to 99 % after the drying. A paper based product 6 is formed from the dried starting material 9 in the brown paper board manufacturing stage 7. The dewatered and dried starting material 9 may be used as such in a middle layer or other layer of the brown paper board. Alternatively, pulp, fibers and/or nanofibrillar cellulose 3 may be added, if needed, into the starting material 9 in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products. In one embodiment the dewatered and dried starting material 9 may be pelletized.

Also the other examples may be carried out according to the process of figure 3.

### Example 10

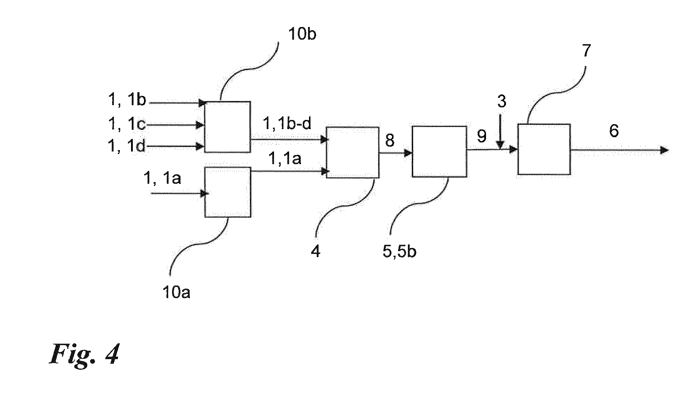

In this example, a paper based product is formed from a starting material 2 according to figure 4. The starting material 2 contains about 100 w-% reject based components 1 from a waste paper treatment process (fig. 5). Reject based components 1 contains component 1a comprising coarse screening and/or pre-screening rejects, component 1b comprising flotation 1 reject, component 1c comprising fine screening reject and component 1d comprising flotation 2 reject. The reject based components are in the form of a low solid sludge, in which dry solid content is about 0.5 - 5 %. The reject based component 1a is dewatered in two steps at a first dewatering stage 10a, by a disc filter and screw press, so that the dry content of the reject based component is about 30 to 40 %. The reject based components 1b - d are collected together, e.g. in a collecting container, and are dewatered in two steps at a second dewatering stage 10b, by a disc filter and screw press, so that the dry content of the mixture of the reject based components is about 50 to 70 %. The starting material is formed from the dewatered reject based components 1a - d. The reject based components are mixed at a first mixing stage 4, if needed, in order to form the dewatered starting material 8. Alternatively, the dewatered starting material 8 can be further dried at the drying stage 5,5b so that the dry content of the starting material 9 is between 70 to 99 % after the drying. A paper based product 6 is formed from the starting material 8, 9 in the brown paper board manufacturing stage 7. Alternatively, pulp, fibers and/or nanofibrillar cellulose 3 are added into the starting material 8, 9 in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 11

In this example, a paper based product is formed from a starting material 2 according to figure 4. The starting material 2 contains about 100 w-% reject based components 1 from a waste paper treatment process (fig. 5) and from a paper manufacturing process. Reject based components 1 contains component 1a comprising coarse screening and/or pre-screening rejects, component 1b comprising flotation 1 reject, component 1c comprising fine screening reject and component 1d comprising flotation 2 reject and component 1e (1e is not shown in figure 4) comprising rejects from a paper manufacturing process. The reject based components are in the form of a low solid sludge, in which dry solid content is about 0.5 - 5 %. The reject based component 1a is dewatered in two steps at a first dewatering stage 10a, by a disc filter and screw press, so that the dry content of the reject based component is about 30 to 40 %. The reject based components 1b - e are collected together, e.g. in a collecting container or in a tube, and are dewatered in two steps at a second dewatering stage 10b, by a disc filter and screw press, so that the dry content of the mixture of the reject based components is about 50 to 70 %. The starting material is formed from the dewatered reject based components 1a - e. The reject based components are mixed at a first mixing stage 4, if needed, in order to form the dewatered starting material 8. Alternatively, the dewatered starting material 8 can be further dried at the drying stage 5,5b so that the dry content of the starting material 9 is between 70 to 99 % after the drying. A paper based product 6 is formed from the starting material 8, 9 in the brown paper board manufacturing stage 7. Alternatively, pulp, fibers and/or nanofibrillar cellulose 3 are added into the starting material 8, 9 in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 12

In this example, a paper based product is formed from a starting material 2 according to figure 2. The starting material 2 contains about 100 w-% reject based components 1, in which components 1a and 1b, alternatively components 1a - 1d (1c,d are not shown in figure), comprising rejects from a paper manufacturing process and flotation 1 and 2 rejects and fine screening reject from a waste paper treatment process (fig. 5). The reject based components are in the form of a low solid sludge, in which dry solid content is about 0.5 - 5 %. The starting material 2 is formed from the rejects. The reject based components are mixed at a first mixing stage 4 in order to form the starting material 2. The starting material 2 is dewatered in two steps at a dewatering stage 5, by a disc filter and a screw press, and so that the dry content of the starting material 8 is about 50 to 70 %. Alternatively, the dewatered starting material 8 can be further dried after the dewatering so that the dry content of the starting material is between 70 to 99 % after the drying. A paper based product 6 is formed from the dewatered 8 and/or dried starting material in the brown paper board manufacturing stage 7. Pulp, fibers and/or nanofibrillar cellulose 3 are added into the starting material in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 13

In this example, a paper based product is formed from a starting material which includes dissolved air flotation reject in addition to other reject or rejects from waste paper treatment and/or paper manufacturing according to examples 1, 2, 3, 5, 6, 7, 8, 9, 10, 11 or 12.

### Example 14

In this example, a paper based product is formed from a starting material 2 according to figure 2. The starting material 2 includes reject based components 1, in which components 1a and 1b, alternatively components 1a - 1d or 1a - 1e (1c,d,e are not shown in figure), comprising coarse screening and/or pre-screening rejects, flotation 1 and 2 rejects and/or fine screening reject, from a waste paper treatment process (fig. 5). The reject based components are in the form of a low solid sludge, in which dry solid content is about 0.5 - 5 %. Further, the starting material contains two dissolved air flotation rejects, which are not shown in figure. The dissolved air flotation rejects are formed so that water-carrying rejects from the thickening after fine screening and after flotation 2 in the waste paper treatment are supplied into the dissolved air flotation processes, and the dissolved air flotation rejects are formed from slurry residues of said processes. The starting material 2 is formed from the rejects. Alternatively, the starting material may contain also one or more reject based component from a paper manufacturing process. The reject based components 1 and dissolved air flotation rejects are mixed at a first mixing stage 4 in order to form the starting material 2. The starting material 2 is dewatered in one or two step at a dewatering stage 5 so that the dry content of the starting material 8 is about 50 to 70 %. Alternatively, the dewatered starting material 8 can be further dried after the dewatering so that the dry content of the starting material is between 70 to 99 % after the drying. A paper based product 6 is formed from the dewatered 8 and/or dried starting material in the brown paper board manufacturing stage 7. Pulp, fibers and/or nanofibrillar cellulose 3 are added into the starting material in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 15

In this example, a paper based product is formed from a starting material 2 according to figure 2. The starting material 2 contains about 100 w-% reject based components 1, in which components 1a and 1b, alternatively components 1a - 1d (1c,d are not shown in figure), comprising rejects from a paper manufacturing process and flotation 1 and 2 rejects and fine screening reject from a waste paper treatment process (fig. 5). The reject based components are in the form of a low solid sludge, in which dry solid content is about 0.5 - 5 %. Further, the starting material contains dissolved air flotation rejects, which are not shown in figure 2. The dissolved air flotation rejects are formed so that water-carrying rejects from the thickening after fine screening and after flotation 2 in the waste paper treatment are supplied into the dissolved air flotation processes, and the dissolved air flotation rejects are formed from slurry residues of said processes. The second dissolved air flotation rejects are formed so that paper manufacturing process waters are supplied into the dissolved air flotation processes, and the dissolved air flotation rejects are formed from slurry residues of said processes. The starting material 2 is formed from the rejects. The reject based components and all dissolved air flotation rejects are mixed at a first mixing stage 4 in order to form the starting material 2. The starting material 2 is dewatered in two steps at a dewatering stage 5, by a disc filter and a screw press, and so that the dry content of the starting material 8 is about 50 to 70 %. Alternatively, the dewatered starting material 8 can be further dried after the dewatering so that the dry content of the starting material is between 70 to 99 % after the drying. A paper based product 6 is formed from the dewatered 8 and/or dried starting material in the brown paper board manufacturing stage 7. Pulp, fibers and/or nanofibrillar cellulose 3 are added into the starting material in connection with the manufacturing stage 7, and the formed composition is utilized in the manufacturing of the brown paper board or its part. Alternatively, this starting material may be used also in the manufacturing of other paper based products, asphalt composition, moulded pulp product, insulation product, construction material or other fiber based products.

### Example 16

In this example, a moulded pulp product is formed from a starting material 2 according to figure 1. The starting material 2 contains about 100 w-% reject based component 1 comprising centrifugal cleaner rejects from a paper manufacturing process, such as from a paper mill and/or from wood handling plant. The reject based component is fed from the paper manufacturing process, and the starting material 2 is formed from the reject based component. The reject based component is mixed at a first mixing stage 4, if needed, in order to form the starting material 2. Alternatively, the starting material may contain also at least one reject based component selected from waste paper treatment reject, coarse screening reject, pre-screening reject, flotation reject, fine screening reject, dissolved air flotation reject and/or other reject from paper manufacturing, which is mixed with the centrifugal cleaner rejects. The starting material 2 is dewatered by means of a fabric press in one or two step at a dewatering stage 5 so that the dry content of the starting material 8 is about 25 to 40 %, preferably 25 to 35 %. Alternatively, the dewatered starting material 8 can be further dried after the dewatering so that the dry content of the starting material is between 70 to 99 % after the drying. A moulded pulp product 6 is formed from the dewatered 8 and/or dried starting material in the moulded pulp product manufacturing stage 7, e.g. in a moulded pulp mill. The dewatered 8 and/or dried starting material may be used as such in the moulded pulp product. Alternatively, pulp, fibers and/or nanofibrillar cellulose 3 may be added, if needed, into the starting material in connection with the manufacturing stage 7, and the formed composition is utilized in the manufacturing of the moulded pulp product. Alternatively, this starting material may be used also in the manufacturing of paper based products, asphalt composition, insulation product, construction material or other fiber based products.

It was observed that the fiber based products, e.g. brown paper boards and moulded pulp products and other fiber based products, can be manufactured easily from different rejects. Also high volume rejects, such as flotation rejects, may be utilized in brown paper boards. The products had good properties, such as good strength. Often, brightness was also good. Further, black colour was not a problem because rejects with black colour may be used in the middle layer of fiber based product. Reject handling costs can be decreased by means of the invention.

The method according to the present invention is suitable in different embodiments to be used for manufacturing the most different kinds of products. The starting material according to the present invention is suitable in different embodiments to be used in different final products.

The invention is not limited merely to the example referred to above; instead many variations are possible within the scope of the inventive idea defined by the claims.

## Claims

1. A method for manufacturing a fiber based product, wherein
- at least part of the fiber based product is formed from a composition which includes a starting material containing at least one reject based component, and
- the reject based component is formed from waste paper treatment reject, coarse screening reject, pre-screening reject, flotation reject, fine screening reject, reject from paper manufacturing, dissolved air flotation reject and/or their combinations.

2. The method according to claim 1, wherein the reject based component is in the form of sludge, slurry or suspension.

3. The method according to claim 1 or 2, wherein the reject based component is dewatered.

4. The method according to any one of claims 1 to 3, wherein the starting material is dewatered.

5. The method according to any one of claims 1 to 4, wherein the starting material is dried after the dewatering.

6. The method according to any one of claims 1 to 5, wherein the composition includes water, pulp, RCF pulp, chemical pulp, TMP pulp, CTMP pulp, PGW pulp, nanofibrillar cellulose, fibers, virgin fibers, long fiber fraction, other fiber fractions, RCF fibers, chemical fibers, TMP fibers, CTMP fibers, PGW fibers and/or fiber composition or their combination.

7. The method according to any one of claims 1 to 6, wherein the composition contains 80 - 100 w-% starting material.

8. The method according to any one of claims 1 to 6, wherein the composition contains below 80 w-% starting material.

9. A starting material wherein the starting material contains at least one reject based component which includes waste paper treatment reject, coarse screening reject, pre-screening reject, flotation reject, fine screening reject, reject from paper manufacturing, dissolved air flotation reject and/or their combinations.

10. The starting material according to claim 9, wherein the starting material is in the form of sludge, slurry, suspension, bulk, stuff, dried composition, solid composition, pellets, sheet, bale or their combination.

11. The starting material according to claim 9 or 10, wherein the starting material includes at least two reject based components.

12. A use of the starting material according to any one of claims 9 to 11, wherein the starting material is used as a raw material in the manufacturing of the fiber based product selected from the group containing paper, paper board, brown paper board, graphic board, fiber board, liner board, kraft board, filler board, cardboard, paper component in gypsum board, paper component in insulating sheet, tissue papers, packaging paper, asphalt composition, moulded pulp product, insulation product, construction material and their combinations.

13. The use according to claim 12, wherein at least part of the fiber based product is formed from the starting material.

14. The use according to any one of claims 12 or 13, wherein at least one layer of the fiber based product is formed from the starting material.

15. A fiber based product, wherein at least part of the fiber based product has been formed from a composition which includes a starting material containing at least one reject based component, and the reject based component includes waste paper treatment reject, coarse screening reject, pre-screening reject, flotation reject, fine screening reject, reject from paper manufacturing, dissolved air flotation reject and/or their combinations.

16. The fiber based product according to claim 15, wherein the fiber based product is selected from the group containing paper, paper board, brown paper board, graphic board, fiber board, liner board, kraft board, filler board, cardboard, paper component in gypsum board, paper component in insulating sheet, tissue papers, asphalt composition, moulded pulp product, insulation product, construction material and their combinations.
